# EUROPÄISCHE PATENTSCHRIFT

(11) **EP 0 713 986 B1**
(45) Veröffentlichungstag und Bekanntmachung des Hinweises auf die Patenterteilung: **30.12.1998**
(21) Anmeldenummer: 95115534.0
(22) Anmeldetag: 02.10.1995
(51) Int. Cl.: F16H 61/02, F16H 61/00

(54) **Steuereinrichtung und Steuerverfahren für ein stufenloses Getriebe**
Control device and method for a continuously variable transmission
Dispositif et méthode de commande d'une transmission à variation continue

(30) Priorität: 24.11.1994 DE 4441875
(43) Veröffentlichungstag der Anmeldung: 29.05.1996
(73) Patentinhaber: Dr.Ing.h.c. F. Porsche Aktiengesellschaft, 70435 Stuttgart (DE)
(72) Erfinder: Lardy, Patrick, D-71263 Weil der Stadt (DE); Petersmann, Joseph, D-71299 Wimsheim (DE)

(56) Entgegenhaltungen:
- EP-A- 0 101 151
- DE-C- 4 120 540
- US-A- 4 853 857

## Beschreibung

Die Erfindung betrifft eine Steuereinrichtung und ein Steuerverfahren für ein stufenloses Getriebe nach dem Oberbegriff der Patentansprüche 1 und 5.

Aus der DE 41 20 540 C1 ist es bekannt, ein stufenloses Getriebe so zu betreiben, daß ein vom Fahrer direkt beeinflußbares Stufengetriebe nachgebildet ist.

Der Erfindung liegt das Problem zugrunde, daß nach der ursprünglichen Aufgabenstellung eines stufenlosen Getriebes dessen Übersetzungseinstellung (genauer gesagt die Einstellung des Liniendruckes) für automatisch ausgeführte, stetige und eher langsame Verstellvorgänge ausgelegt ist. Um diese materialschonend und ohne störende Schwingungen ausführen zu können, ist die Einstellung der Übersetzung durch eine Dämpfungseinrichtung mit einem hohen Dämpfungsgrad versehen, die entweder in der Übersetzungssteuerung, die die Bestimmung der einzustellenden Übersetzung vornimmt, oder einer Stelleinrichtung , die eine vorgegebene Übersetzung durch Veränderung der auf Verstellelemente des Getriebes wirkenden Drücke einstellt, vorgesehen ist.

Zur Nachbildung eines Stufengetriebes sind Übersetzungswechsel in möglichst kurzer Zeit auszuführen; nach einem solchen Übersetzungswechsel wird die Übersetzung dann im wesentlichen konstant gehalten. Mit dem beschriebenen hohen Dämpfungsgrad ist dies jedoch nicht möglich, da hiermit rasche Änderungen der Übersetzung vermieden werden sollen.

Nach der Erfindung ist es vorgesehen, in einer Dämpfungseinrichtung bzw. Dämpfungsfunktion den bei der Einstellung der Übersetzung wirksamen Dämpfungsgrad an die gewählte Betriebsart anzupassen: In der automatischen Betriebsart wird ein hoher Dämpfungsgrad verwendet und damit ein hoher Komfort in Verbindung mit geringem Verschleiß und geringem Energieaufwand zum Verstellen der Übersetzung erreicht. In der manuellen Betriebsart wird hingegen ein niedriger Dämpfungsgrad vorgesehen, um so die durch Übersetzungssprünge dargestellten Schaltungen möglichst genau nachbilden zu können.

Die Unteransprüche zeigen vorteilhafte Weiterbildungen der Erfindung. Die Anordnung der Dämpfungseinrichtung in einer Stelleinrichtung ist dann besonders einfach zu realisieren, wenn die Stelleinrichtung als von der eigentlichen Übersetzungssteuerung getrennter Teil dargestellt ist. Zudem sind in der Stelleinrichtung alle hydraulischen Einflußgrößen, die auf die Einstellung der Übersetzung am Getriebe wirken, direkt berücksichtigt, so daß es an dieser Stelle ausreichend sein kann, bereits vorhandene Einrichtungen oder Funktionen hinsichtlich ihres Dämpfungsgrades beeinflußbar zu machen.

Die Anordnung der Dämpfungseinrichtung in einer Übersetzungssteuerungseinrichtung, die zur Bestimmung eines Soll-Übersetzungsverhältnisses dient, bietet den Vorteil, den Dämpfungsgrad gezielt nur auf die Vorgabe des Soll-Übersetzungsverhältnisses wirken zu lassen. Voraussetzung ist, daß die nachfolgende Stelleinrichtung einen Dämpfungsgrad aufweist, der kleiner als der kleinste innerhalb der Dämpfungseinrichtung verwendete Dämpfungsgrad ist.

Die Anordnung zweier Dämpfungseinrichtungen mit jeweils festem Dämpfungsgrad direkt ausgangs von Bestimmungseinrichtungen zur Bestimmung des Soll-Übersetzungsverhältnisses in der ersten bzw. der zweiten Betriebsart ist einfacher als die vorgenenannten Lösungen, weil hier durch die direkte Zuordnung zu den Betriebsarten eine Umschalteinrichtun für den Dämpfungsgrad entfällt.

Die aufgeführten Vorteile und Weiterbildungen beziehen sich in gleicher Weise auf das erfindungsgemäße Steuerverfahren.

Die Erfindung ist nachstehend anhand des in den Figuren dargestellten Ausführungsbeispieles näher beschrieben.

Es zeigen
- Fig. 1: eine Übersicht über ein stufenloses Getriebe mit einer Steuerung und
- Fig. 2: ein schematisches Blockschaltbild einer Übersetzungssteuerung,

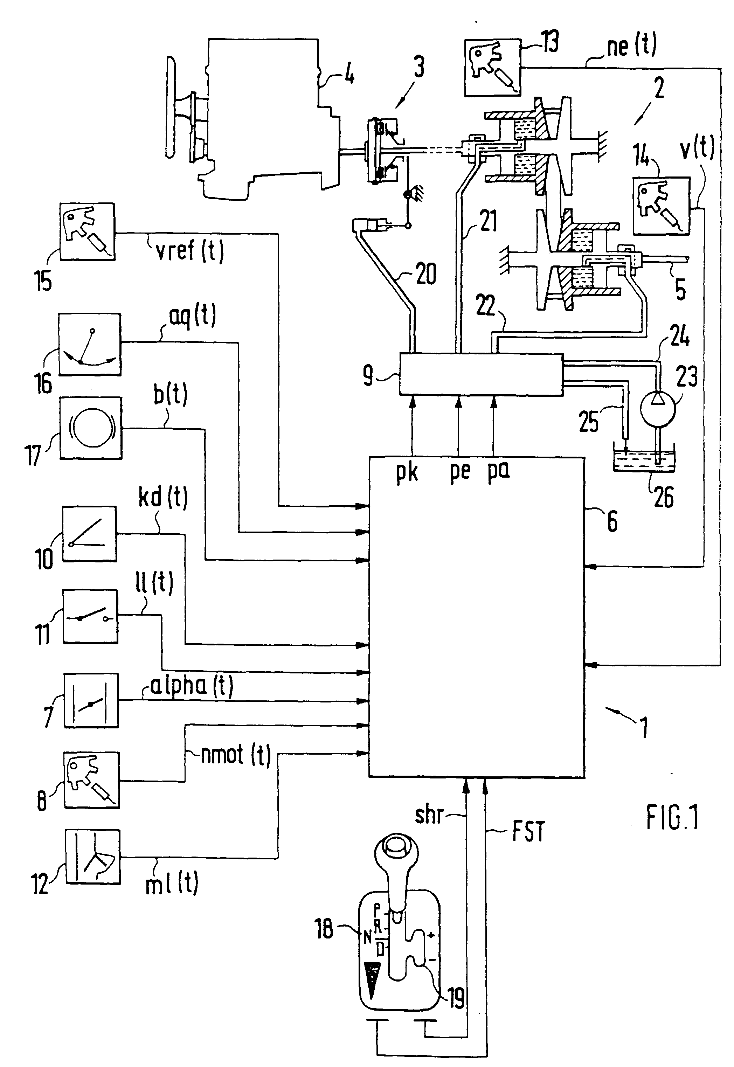

**Fig. 1** zeigt ein Blockschaltbild einer Steuerung 1 eines elektro-hydraulisch betätigten stufenlosen Getriebes 2 am Beispiel eines Umschlingungsgetriebes. Das stufenlose Getriebe 2 wird über eine steuerbare Anfahrkupplung 3 von einer Brennkraftmaschine 4 angetrieben. Eine Abtriebswelle 5 des stufenlosen Getriebes 2 ist mit einem nicht gezeigten Radantrieb eines Kraftfahrzeugs verbunden.

Größen oder Funktionen, die sich mit der Zeit t ändern, sind nachfolgend als Funktionen f(t) der Zeit t dargestellt.

Ein Steuergerät 6 steuert wenigstens in Abhängigkeit von der Drosselklappenstellung alpha(t) eines Drosselklappenwinkelgebers 7 und einer Motordrehzahl nmot(t) eines Motordrehzahlgebers 8 der Brennkraftmaschine 4 einen Hydraulik-Ventilblock 9 an. Zur Steuerung des stufenlosen Getriebes 2 und der Anfahrkupplung 3 erhält das Steuergerät 6 als weitere Eingangsgrößen ein Kick-down-Signal kd(t) eines Kick-down-Schalters 10, ein Leerlaufsignal ll(t) eines Leerlaufschalters 11, eine Luftmenge bzw. Luftmasse ml(t) eines Luftmengen- bzw. Luftmassengebers 12 der Brennkraftmaschine 4 sowie eine Getriebeeingangsdrehzahl ne(t) eines Getriebeeingangsdrehzahlgebers 13 und eine Fahrgeschwindigkeit v(t) eines Fahrgeschwindigkeitgebers 14. Zusätzlich wird vom Steuergerät 6 eine Geschwindigkeit vref(t) eines Referenzgeschwindigkeitgebers 15 an einer nicht angetriebenen Fahrzeugachse, eine Querbeschleunigung aq(t) eines Querbeschleunigungsgebers 16 und ein Bremssignal b(t) eines Bremssignalgebers 17 erfasst und verarbeitet.

Schließlich ist die Steuerung üblicherweise vom Fahrzeugführer über eine Wähleinrichtung 18 zur Vorwahl von Fahrstufen P (Parksperre), R (Rückwärtsgangstufe), N (Leergangsstufe) und D (selbstätige Einstellung des Übersetzungsverhältnisses u.ä. des stufenlosen Getriebes) beeinflußbar; ferner ist ein Einstellbereich der Wähleinrichtung 18 zur direkten Vorgabe des Übersetzungsverhältnisses u.ä. vorgesehen.

Die Wähleinrichtung 18 kann aus der Fahrstufe D in eine zweite Schaltgasse 19 bewegt werden, in der die Wähleinrichtung 18 als Wippschalter arbeitet und der Fahrzeugführer das Übersetzungsverhältnis im Sinne einer Hochschaltung oder einer Rückschaltung beeinflussen kann. Die Wähleinrichtung 18 gibt ein Fahrstufensignal FST und ein Schaltanforderungssignal shr für eine Hochschaltung oder eine Rückschaltung ab.

Hier und im folgenden steht der Begriff "Hochschalten" oder "Verringern der Übersetzung" für eine Übersetzungsänderung, die bei gleichbleibender Eingangsdrehzahl die Ausgangsdrehzahl des Getriebes erhöht, entsprechend einer Hochschaltung bei einem Stufengetriebe. Umgekehrt stehen die Begriffe "Rückschalten" und "Erhöhen der Übersetzung" für eine Übersetzungsänderung im Sinne einer Verringerung der Ausgangsdrehzahl des Getriebes bei gleichbleibender Eingangsdrehzahl, entsprechend einer Rückschaltung bei einem Stufengetriebe.

In Abhängigkeit von den genannten Größen steuert das Steuergerät 6 über einen Signalausgang pk und den Ventilblock 9 den Hydraulikdruck in der Anfahrkupplung 3 sowie über Signalausgänge pe und pa und den Hydraulikventilblock 9 ein Übersetzungsverhältnis ue zwischen der Getriebeeingangsdrehzahl ne(t) und der Getriebeausgangsdrehzahl (Fahrgeschwindigkeit) v(t) an. Der Hydraulikventilblock 9 verbindet hierzu entsprechende Steuerleitungen 20, 21 und 22 der Anfahrkupplung 3 und des stufenlosen Getriebes 2 mit einer an eine Pumpe 23 angeschlossenen Druckleitung 24 oder einer Rücklaufleitung 25 zu einem Vorratsbehälter 26 für Hydraulikflüssigkeit.

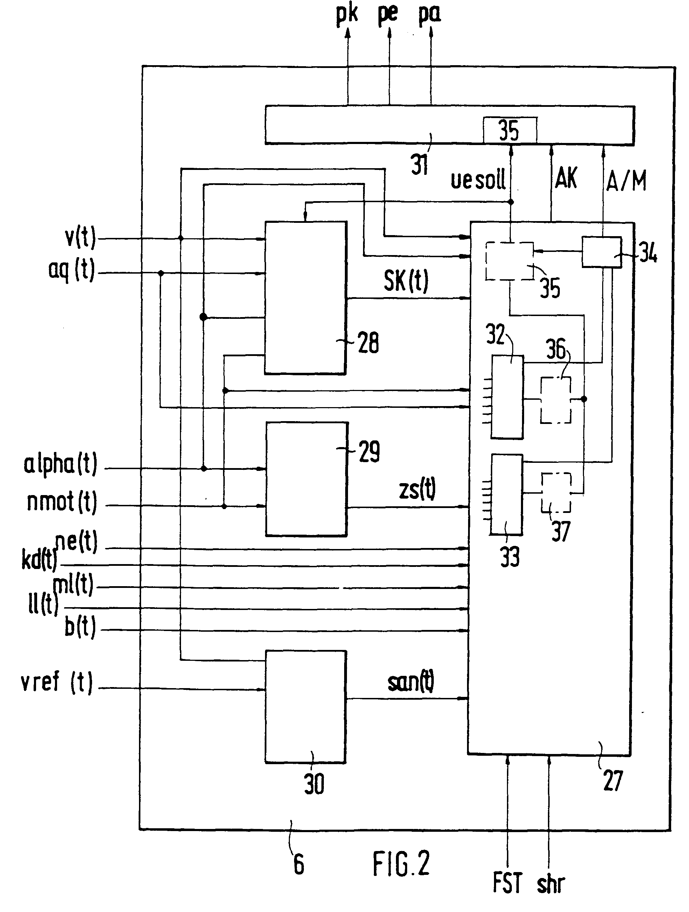

Das Steuergerät 6 umfaßt wie in **Fig. 2** dargestellt eine Übersetzungssteuerung 27, die mit einer Fahraktivitätsermittlungfunktion 28, einer Zug-Schub-Ermittlungsfunktion 29, einer Antriebsschlupfermittlungsfunktion 30 und einer Stellfunktion 31 verbunden ist.

Die Fahraktivitätsermittlungsfunktion 28 bestimmt eine den Fahrstil des Fahrers oder dessen verkehrssituationsbedingtes Handeln im Bezug auf die Steuerung des Kraftfahrzeuges bewertenden Größe Fahraktivität SK(t), vorzugsweise nach einem in der DE-OS 39 22 051 beschriebenen Verfahren.

Die Zug-Schub-Ermittlungsfunktion 29 gibt in Abhängigkeit von der Drosselklappenstellung alpha(t) und der Motordrehzahl nmot(t) ein Signal für Zug- oder Schubbetrieb des Fahrzeuges Zug/Schub zs(t) ab und die Antriebsschlupfermittlungsfunktion 30 ermittelt aus der Differenz von Fahrgeschwindigkeit v(t) und Geschwindigkeit vref(t) einen den Schlupf der angetriebenen Räder repräsentierenden Antriebsschlupf san(t).

Aus diesen Größen, dem Fahrstufensignal FST, dem Schaltanforderungssignal shr, der Drosselklappenstellung alpha(t), dem Kick-down-Signal kd(t), dem Leerlaufsignal ll(t), der Luftmasse ml(t), der Getriebeeingangsdrehzahl ne(t), der Fahrgeschwindigkeit v(t), der Querbeschleunigung aq(t), dem Bremssignal b(t) und der Getriebeausgangsdrehzahl ne(t) ermittelt die Übersetzungssteuerung 27 ein Soll-Übersetzungsverhältnis uesoll sowie ein Signal Anfahrkupplung auf/zu AK, die an die Stellfunktion 31 weitergegeben werden.

Die Stellfunktion 31 steuert mittels der Signalausgänge pe und pa die Übersetzungseinstellung des Getriebes 2. Darüber hinaus wird die Anfahrkupplung nach Maßgabe des Signales Anfahrkupplung auf/zu AK von der Stellfunktion 31 über den Signalausgang pk gesteuert. In der Stellfunktion 31 wird die Sollübersetzung uesoll nicht unmittelbar verarbeitet, sondern erst nach Durchlauf durch eine vorgeschaltete Dämpfungsfunktion 35.

Die Übersetzungssteuerung 27 ermittelt mittels einer Bestimmungsfunktion 32 in einer ersten, selbsttätig die Übersetzung wählenden Betriebsart aus den Eingangsgrößen Zug/Schub zs(t) Antriebsschlupf san(t), Fahrstufensignal FST, Fahraktivität SK(t), Drosselklappenstellung alpha(t), Motordrehzahl nmot(t), Leerlaufsignal ll(t), Kick-Down-Signal kd(t), Luftmassensignal ml(t), Bremssignal b(t) und Getriebeeingangsdrehzahl ne(t) das Soll-Übersetzungsverhältnis uesoll.

In einer zweiten, vom Fahrer beeinflußten Betriebsart ist durch eine zweite Bestimmungsfunktion 33 ein vom Fahrer direkt beeinflußbares Stufengetriebe nachgebildet. Das Soll-Übersetzungsverhältnis uesoll wird aus den Eingangsgrößen Schaltanforderungssignal shr, Getriebeeingangsdrehzahl ne(t), Drosselklappenstellung alpha(t) und Zug/Schub zs(t) bestimmt.

Die zweite Bestimmungsfunktion 33 enthält eine nicht gezeigte Tabelle, in der voreingestellte Soll-Übersetzungen uesoll_i abgelegt sind. Da jede dieser voreingestellten Sollübersetzungen uesoll_i bei der Nachbildung eines Stufengetriebes einem Gang dieses Stufengetriebes entspricht, sin so viele voreingestellten Sollübersetzungen uesoll_i vorgesehen, wie Gänge eines Stufengetriebes nachgebildet werden sollen. Die voreingestellten Sollübersetzungen uesoll_i können daher auch als Gänge bezeichnet werden.

Im dargestellten Beispiel ist ein 5gängiges Stufengetriebe nachgebildet, so daß für Vorwärtsfahrt die voreingestellten Sollübersetzungen uesoll_1, uesoll_2, uesoll_3, uesoll_4 und uesoll_5 in der Tabelle abgelegt sind. Die Bezeichnung der voreingestellten Sollübersetzungen erfolgt nach dem Schema uesoll_i, wobei für den entsprechenden Gang des Stufengetriebes steht. uesoll_3 steht also für die voreingestellten Sollübersetzungen, die dem 3. Gang des Stufengetriebes entspricht. Während die Gänge von uesoll_1 nach uesoll_5 'höher' werden, verringert sich in dieser Richtung der Wert der voreingestellten Sollübersetzung: die voreingestellte Sollübersetzung ist bei uesoll_1 am höchsten und bei uesoll_5 am niedrigsten.

Die Übersetzungssteuerung 27 gibt in jeder der beiden Betriebsarten das Soll-Übersetzungsverhältnis uesoll an die Stellfunktion 31 weiter. Zusätzlich erzeugt ein Betriebsartengeber 34 ein Signal A/M, das anzeigt, ob gerade die erste, selbsttätig die Übersetzung wählende Betriebsart (A/M = A) oder die zweite, vom Fahrer beeinflußte Betriebsart (A/M = M) gewählt ist.

Ist die erste Betriebsart gewählt, so verwendet die Dämpfungsfunktion 35 einen hohen Dämpfungsgrad bei der Übersetzungseinstellung des Getriebes 2. Die Übersetzungseinstellung ist komfortabel, und durch den hohen Dämpfungsgrad wird nicht jede noch so kleine Änderung des Soll-Übersetzungsverhältnisses sofort ausgeführt, so daß der zum Einstellen der Übersetzungen am Getriebe 2 notwendige Energieaufwand wegen der verminderten Anzahl an Stellbewegungen und der geringen Geschwindigkeit, mit der diese Stellbewegungen ausgeführt werden, vermindert ist. Gleichzeitig wird durch die Verminderung der Stellbewegungen auch der Verschleiß verringert. Ist hingegen die zweite Betriebsart gewählt, so verwendet die Dämpfungsfunktion 35 einen niedrigen Dämpfungsgrad bei der Übersetzungseinstellung des Getriebes 2, wobei das Soll-Übersetzungsverhältnis uesoll_i mit geringstmöglicher Verzugszeit, jedoch ohne merkliches Überschwingen eingestellt wird.

Nach einem weiteren Ausführungsbeispiel ist die Dämpfungsfunktion 35, wie in **Fig. 2** gestrichelt dargestellt, anstelle in der Stellfunktion 31 in der Übersetzungssteuerung 27 angeordnet.

Sofern die Unterbringung von zwei Dämpfungsfunktionen möglich ist, ist nach einem weiteren Ausführungsbeispiel die einzelne Dämpfungsfunktion 35 durch zwei Dämpfungsfunktionen 36, 37 ersetzt, die, mit unterschiedlichen Dämpfungsgraden versehen, jeweils ausgangs der Bestimmungsfunktionen 32,33 angeordnet sein. In diesem Fall kann auf den Betriebsartengeber 34 verzichtet werden. Die der ersten Bestimmungsfunktion 32 zugeordnete Dämpfungsfunktion 36 weist dabei einen höheren Dämpfungsgrad auf als die der zweiten Bestimmungsfunktion 33 zugeordnete Dämpfungsfunktion 37.

Die dargestellten Ausführungsbeipiele sind, wie z.T. durch die Verwendung des Ausdruckes "Funktion" hinsichtlich ihrer Realisierung nicht festgelegt, d.h. sie können in gleicher Weise sowohl als Vorrrichtung wie auch als Verfahren ausgeführt werden. Ein Beispiel für eine Ausführung als Vorrichtung wäre die Darstellung in diskreten Baugruppen, sei es als elektrischer oder hydraulischer Schaltkreis. Die Ausführung als Verfahren kann typischerweise vorgenommen werden, indem die gezeigten Funktionen als Unterprogramme in einem mikroprozessorgesteuerten Steuergerät programmiert werden und so eine Abfolge von Verfahrensschritten darstellen.

## Patentansprüche

1. Steuereinrichtung (6) für ein stufenloses Getriebes (2), wobei neben einer ersten, automatisch die Übersetzung (ue) wählenden Betriebsart eine zweite Betriebsart vorgesehen ist, in der die Übersetzung (ue) vom Fahrer direkt wählbar ist, **dadurch gekennzeichnet**, daß die Steuereinrichtung (6) bei der Einstellung der Übersetzung (ue) am Getriebe (2) eine Dämpfungseinrichtung verwendet, deren Dämpfungsgrad in der ersten Betriebsart höher als in der zweiten Betriebsart gewählt ist.

2. Steuereinrichtung nach Anspruch 1, **dadurch gekennzeichnet**, daß die Steuereinrichtung (6) eine Übersetzungssteuerungseinrichtung (27), die zur Bestimmung eines Soll-Übersetzungsverhältnisses (uesoll) dient, und nachgeschaltet eine Stelleinrichtung (31), die zur Einstellung eines Soll-Übersetzungsverhältnisses (uesoll) am Getriebe (2) dient, aufweist und die Dämpfungseinrichtung innerhalb der Stelleinrichtung (31) angeordnet ist.

3. Steuereinrichtung nach Anspruch 1, **dadurch gekennzeichnet**, daß die Stelleinrichtung (31) eine Übersetzungssteuerungseinrichtung (27), die zur Bestimmung eines Soll-Übersetzungsverhältnisses (uesoll) dient, und nachgeschaltet eine Stelleinrichtung (31), die zur Einstellung eines Soll-Übersetzungsverhältnisses (uesoll) am Getriebe (2) dient, aufweist und die Dämpfungseinrichtung innerhalb der Übersetzungssteuerungseinrichtung (27) angeordnet ist.

4. Steuereinrichtung nach Anspruch 1, **dadurch gekennzeichnet**, daß eine Übersetzungssteuerungseinrichtung (27) eine erste Bestimmungseinrichtung zur Bestimmung eines Soll-Übersetzungsverhältnisses (uesoll) in der ersten Betriebsart und eine zweite Bestimmungseinrichtung zur Bestimmung eines Soll-Übersetzungsverhältnisses (uesoll) in der zweiten Betriebsart aufweist und je eine Dämpfungseinrichtung mit einem festen Dämpfungsgrad ausgangs der ersten und der zweiten Bestimmungseinrichtung angeordnet sind.

5. Steuerverfahren für ein stufenloses Getriebes (2), wobei neben einer ersten, automatisch die Übersetzung (ue) wählenden Betriebsart eine zweite Betriebsart vorgesehen ist, in der die Übersetzung (ue) vom Fahrer direkt wählbar ist, **dadurch gekennzeichnet**, daß in der Steuereinrichtung (6) bei der Einstellung der Übersetzung (ue) am Getriebe (2) eine Dämpfungsfunktion verwendet wird, die in der ersten Betriebsart einen höheren Dämpfungsgrad als in der zweiten Betriebsart verwendet.

6. Steuerverfahren nach Anspruch 5, **dadurch gekennzeichnet**, daß die Steuereinrichtung (6) eine Übersetzungssteuerungsfunktion (27), die zur Bestimmung eines Soll-Übersetzungsverhältnisses (uesoll) dient, und nachgeschaltet eine Stellfunktion (31), die zur Einstellung eines Soll-Übersetzungsverhältnisses (uesoll) am Getriebe (2) dient, aufweist und die Dämpfungsfunktion Teil der Stellfunktion (31) ist.

7. Steuerverfahren nach Anspruch 5, **dadurch gekennzeichnet**, daß die Stellfunktion (31) eine Übersetzungssteuerungsfunktion (27), die zur Bestimmung eines Soll-Übersetzungsverhältnisses (uesoll) dient, und nachgeschaltet eine Stellfunktion (31), die zur Einstellung eines Soll-Übersetzungsverhältnisses (uesoll) am Getriebe (2) dient, aufweist und die Dämpfungsfunktion Teil der Übersetzungssteuerungsfunktion (27) ist.

8. Steuerverfahren nach Anspruch 5, **dadurch gekennzeichnet**, daß eine Übersetzungssteuerungsfunktion (27) eine erste Bestimmungsfunktion zur Bestimmung eines Soll-Übersetzungsverhältnisses (uesoll) in der ersten Betriebsart und eine zweite Bestimmungsfunktion zur Bestimmung eines Soll-Übersetzungsverhältnisses (uesoll) in der zweiten Betriebsart aufweist und je eine Dämpfungsfunktion mit einem festen Dämpfungsgrad der ersten und der zweiten Bestimmungsfunktion nachgeschaltet sind.

## Claims

1. A control device (6) for a continuously variable transmission (2) wherein, in addition to a first operating mode which automatically selects the transmission (ue), a second operating mode is provided in which the transmission (ue) can be selected directly by the driver, **characterised in that** the control device (6) employs a damping device for setting the transmission (ue) in the gearbox (2), the damping ratio of which damping device is selected to be greater in the first operating mode than in the second operating mode.

2. A control device according to claim 1, **characterised in that** the control device (6) has a transmission control device (27) which serves to measure a desired transmission ratio (uesoll), and a setting device (31) connected downstream which serves to set a desired transmission ratio (uesoll) in the gearbox (2), and the damping device is arranged inside the setting device (31).

3. A control device according to claim 1, **characterised in that** the setting device (31) has a transmission control device (27) which serves to measure a desired transmission ratio (uesoll), and a setting device (31) connected downstream which serves to set a desired transmission ratio (uesoll) in the gearbox (2), and the damping device is arranged inside the transmission control device (27).

4. A control device according to claim 1, **characterised in that** a transmission control device (27) has a first measuring device for measuring a desired transmission ratio (uesoll) in the first operating mode, and a second measuring device for measuring a desired transmission ratio (uesoll) in the second operating mode, and a damping device with a fixed damping ratio is arranged at the output of both the first and the second measuring device.

5. A control method for a continuously variable transmission (2), where in addition to a first operating mode which automatically selects the transmission (ue), a second operating mode is provided in which the transmission (ue) can be selected directly by the driver, **characterised in that** in the control device (6), a damping function is used for setting the transmission (ue) in the gearbox (2), which damping function employs a higher damping ratio in the first operating mode than in the second operating mode.

6. A control method according to claim 5, **characterised in that** the control device (6) has a transmission control function (27) which serves to measure a desired transmission ratio (uesoll), and a setting function (31) connected downstream which serves to set a desired transmission ratio (uesoll) in the gearbox (2), and the damping function is a part of the setting function (31).

7. A control method according to claim 5, **characterised in that** the setting function (31) has a transmission control function (27) which serves to measure a desired transmission ratio (uesoll), and a setting function (31) connected downstream which serves to set a desired transmission ratio (uesoll) in the gearbox (2), and the damping function is a part of the transmission control function (27).

8. A control method according to claim 5, **characterised in that** a transmission control function (27) has a first measuring function for measuring a desired transmission ratio (uesoll) in the first operating mode, and a second measuring function for measuring a desired transmission ratio (uesoll) in the second operating mode, and a damping function with a fixed damping ratio is connected downstream from both the first and the second measuring function.

## Revendications

1. Dispositif de commande (6) pour une transmission (2) à variation continue, dans lequel il est prévu, outre un premier mode de fonctionnement, sélectionnant automatiquement le rapport (ue), un deuxième mode de fonctionnement dans lequel le rapport (ue) peut être directement sélectionné par le conducteur, caractérisé en ce que le dispositif de commande (6) utilise, lors du réglage du rapport (ue) sur la transmission (2), un dispositif d'amortissement, dont le degré d'amortissement est choisi plus élevé dans le premier mode de fonctionnement que dans le second.

2. Dispositif de commande selon la revendication 1, caractérisé en ce que le dispositif de commande (6) comporte un dispositif de commande de rapport (27), qui sert à déterminer un rapport de transmission de consigne (uesoll) et en aval, un dispositif de réglage (31), qui sert au réglage d'un rapport de transmission de consigne (uesoll) sur la transmission (2), et le dispositif d'amortissement est disposé à l'intérieur du dispositif de réglage 31.

3. Dispositif de commande selon la revendication 1, caractérisé en ce que le dispositif de réglage (31) comporte un dispositif de commande de rapport (27), qui sert à déterminer un rapport de transmission de consigne (uesoll) et en aval, un dispositif de réglage (31), qui sert au réglage d'un rapport de transmission de consigne (uesoll) sur la transmission (2), et le dispositif d'amortissement est disposé à l'intérieur du dispositif de commande de rapport (27).

4. Dispositif de commande selon la revendication 1, caractérisé en ce qu'un dispositif de commande de rapport (27) comporte un premier dispositif de détermination destiné à déterminer un rapport de transmission de consigne (uesoll) dans le premier mode de fonctionnement et un deuxième dispositif de détermination, destiné à déterminer un rapport de transmission de consigne (uesoll) dans le deuxième mode de fonctionnement, et en ce qu'un dispositif d'amortissement avec un degré d'amortissement fixe est disposé à la sortie du premier et à la sortie du deuxième dispositif de détermination.

5. Procédé de commande d'une transmission (2) à variation continue, dans lequel il est prévu, outre un premier mode de fonctionnement, sélectionnant automatiquement le rapport (ue), une deuxième mode de fonctionnement dans lequel le rapport (ue) peut être directement sélectionné par le conducteur, caractérisé en ce que dans le dispositif de commande (6), il est utilisé, lors du réglage du rapport (ue) sur la transmission (2), une fonction d'amortissement, qui utilise dans le premier mode de fonctionnement un degré d'amortissement plus important que dans le deuxième mode de fonctionnement.

6. Procédé de commande selon la revendication 5, caractérisé en ce que le dispositif de commande (6) comporte une fonction de commande de rapport (27), qui sert à déterminer un rapport de transmission de consigne (uesoll), et en aval une fonction de réglage (31), qui sert à régler un rapport de transmission de consigne (uesoll) sur la transmission (2), et la fonction d'amortissement fait partie de la fonction de réglage (31).

7. Procédé de commande selon la revendication 5, caractérisé en ce que la fonction de réglage (31) comporte une fonction de commande de rapport (27), qui sert à déterminer un rapport de transmission de consigne (uesoll) et en aval, une fonction de réglage (31) qui sert à régler un rapport de transmission de consigne (uesoll) sur la transmission (2), et la fonction d'amortissement fait partie de la fonction de commande de transmission (27).

8. Procédé de commande selon la revendication 5, caractérisé en ce qu'une fonction de commande de rapport (27) comporte une première fonction de détermination destinée à déterminer un rapport de transmission de consigne (uesoll) dans le premier mode de fonctionnement et une deuxième fonction de détermination destinée à déterminer un rapport de transmission de consigne (uesoll) dans le deuxième mode de fonctionnement, et en ce qu'une fonction d'amortissement avec un degré d'amortissement fixe est monté en aval de la première fonction de détermination et en aval de la deuxième fonction de détermination.
